# EUROPEAN PATENT APPLICATION

(11) **EP 1 933 405 A1**
(43) Date of publication of application: **18.06.2008**
(21) Application number: 06811002.2
(22) Date of filing: 26.09.2006
(51) Int. Cl.: H01M 8/02, H01M 8/12

(54) **FUEL CELL AND ITS FABRICATION METHOD**

(30) Priority: 07.10.2005 JP 2005294655
(71) Applicant: TOYOTA JIDOSHA KABUSHIKI KAISHA, Toyota-shi, Aichi-ken, 471-8571 (JP)
(72) Inventor: IZAWA, Yasuhiro, Toyota-shi, Aichi 4718571 (JP)
(74) Representative: TBK-Patent
(86) International application number: PCT/JP2006/319647
(87) International publication number: WO 2007/043368

(57) **Abstract**

A method of manufacturing a fuel cell 100 is **characterized by** comprising a first step of forming at least a recess 23 on one side of a strengthening frame 2 with a half etching treatment, a second step of jointing a hydrogen permeable membrane 3 to the one side of the strengthening frame 2 with a cladding; and a third step of performing a half etching treatment to a region that is from a region of the other side of the strengthening frame 2 corresponding to the recess 23 to the recess 23.

## Description

### TECHNICAL FIELD

This invention generally relates to a fuel cell and a method of manufacturing a fuel cell.

### BACKGROUND ART

In general, a fuel cell is a device that obtains electrical power from fuel, hydrogen and oxygen. Fuel cells are being widely developed as an energy supply device because fuel cells are environmentally superior and can achieve high energy efficiency.

Fuel cells, for example, have an electrical power generator in which electrodes hold an electrolyte. A strengthening frame supporting and strengthening the electrical power generator is necessary in order to reduce a thickness of the electrical power generator in the structure. In this case, it is necessary to form a gas passageway such as a through hole in the strengthening frame in order to provide a fuel gas to the electrode of the electrical power generator. And it is necessary that the strengthening frame should be jointed to the electrode of the electrical power generator, in order to strengthen the electrical power generator. It is however difficult to joint the strengthening frame having the gas passageway to the electrode.

For example, Patent Document 1 discloses an art where a passageway forming member in which the fuel gas flows is jointed to a hydrogen permeable membrane with a diffusion jointing. With the art disclosed in Patent Document 1, it is possible to reduce a thickness of a device, because it is possible to joint the passageway forming member to the hydrogen permeable membrane without a melting of a base material.
Patent Document 1: Japanese Patent Application Publication No. 2003-95617

### DISCLOSURE OF THE INVENTION

### PROBLEMS TO BE SOLVED BY THE INVENTION

However, there may be a problem that a composition of the hydrogen permeable membrane is changed because of a heat generated in the diffusion jointing, with the art disclosed in the Patent Document 1. And so, there is a method of jointing the hydrogen permeable membrane to the passageway forming member with a cladding. With the method, however, there may be a problem that the passageway forming member is deformed.

An object of the present invention is to provide a fuel cell and a method of manufacturing a fuel cell that restrains a composition change of an electrode and a strengthening frame and restrains a deformation of the strengthening frame.

### MEANS FOR SOLVING THE PROBLEMS

A method of manufacturing a fuel cell in accordance with the present invention is characterized by comprising a first step of forming at least a recess portion on one side of a strengthening frame with a half etching treatment, a second step of jointing a hydrogen permeable membrane to the one side of the strengthening frame with a cladding, and a third step of performing a half etching treatment to a region that is from a region of the other side of the strengthening frame corresponding to the recess portion to the recess portion.

With the method of manufacturing the fuel cell in accordance with the present invention, at least a recess portion is formed on one side of the strengthening frame with the half etching treatment. The hydrogen permeable membrane is jointed to the one side of the strengthening frame with the cladding. The half etching treatment is performed to the region that is from the region of the other side of the strengthening frame corresponding to the recess portion to the recess portion. In this case, a through hole is formed in the strengthening frame after the strengthening frame is jointed to the hydrogen permeable membrane with the cladding. Therefore, there is little deformation of the through hole caused by the cladding. And it is possible to restrain the deformation of the hydrogen permeable membrane caused by the deformation of the strengthening frame. It is therefore possible to restrain an unevenness of a fuel cell flow caused by the deformation of the though hole. And the strengthening frame and the hydrogen permeable membrane are not under a high temperature condition during the jointing, because the strengthening frame is jointed to the hydrogen permeable membrane with the cladding. It is therefore possible to restrain composition change of the strengthening frame and the hydrogen permeable membrane. It is further possible to restrain damage to the hydrogen permeable membrane caused by excessive half etching, because the recess portion is formed on the strengthening frame.

The third step may include a step of performing a half etching treatment to a given region of the other side of the strengthening frame except for the region corresponding to the recess portion and forming at least a projection portion on the other side of the strengthening frame. In this case, the projection portion aligns the fuel gas provided to the hydrogen permeable membrane. The fuel gas is therefore provided to the hydrogen permeable membrane efficiently. And the strengthening frame and the projection portion have an integral structure, because the projection portion is formed on the strengthening frame with the half etching treatment. In this case, the reduction of strength of the strengthening frame is restrained. It is therefore possible to restrain the deformation of the strengthening frame and to reduce a thickness of the strengthening frame. And it is possible to restrain an increase of heat capacity of the strengthening frame. There is no contact resistance between the projection portion and the strengthening frame, because the projection portion is formed with the strengthening frame integrally.

The strengthening frame may have electrical conductivity. And the method may further include a fourth step of jointing the strengthening frame to a separator through the projection portion. In this case, the separator collects an electrical power without a power collector. And a contact resistance may be reduced compared to a case where the power collector is provided. Therefore, a contact resistance of the fuel cell in accordance with the present invention may be reduced.

The method may further include a fifth step of forming an electrolyte having proton conductivity on the one side of the hydrogen permeable membrane after the fourth step. In this case, it is possible to restrain damage to the electrolyte caused by a pressure during the jointing. The method may further include a sixth step of providing a cathode, a power collector and a separator in order on the other side of the electrolyte.

A fuel cell in accordance with the present invention is characterized by comprising, an electrical power generator having a hydrogen permeable membrane, an electrolyte having proton conductivity, and a cathode, and a strengthening frame that strengthens the hydrogen permeable membrane and the electrolyte. At least a projection portion is provided on the strengthening frame on an opposite side of the hydrogen permeable membrane. With the fuel cell in accordance with the present invention, the projection portion aligns a fuel gas provided to the hydrogen permeable membrane. The fuel gas is therefore provided to the hydrogen permeable membrane efficiently. And the projection portion may restrain reduction of strength of the strengthening frame. It is therefore possible to restrain the deformation of the strengthening frame and to reduce the thickness of the strengthening frame. And it is possible to restrain an increase of heat capacity of the strengthening frame.

The strengthening frame may have an electrical conductivity, and an electrical potential of the strengthening frame may be substantially same as that of the hydrogen permeable membrane. The fuel cell may further include a separator jointed to the strengthening frame through at least the projection portion. In this case, the separator collects an electrical power without a power collector.

### EFFECTS OF THE INVENTION

According to the present invention, the deformation of the strengthening frame may be restrained. It is therefore possible to restrain an unevenness of the fuel gas flow caused by the deformation of the through hole. And it is possible to restrain composition change of the strengthening frame and the hydrogen permeable membrane.

### BRIEF DESCRIPTION OF THE DRAWINGS

FIG. 1 illustrates a schematic cross sectional view of a fuel cell in accordance with a first embodiment of the present invention;
FIG. 2A and FIG. 2B illustrate details of a strengthening frame;
FIG. 3A through FIG. 3C illustrate a manufacturing flow diagram of a fuel cell; and
FIG. 4A through FIG. 4C illustrate a manufacturing flow diagram of a fuel cell.

### BEST MODES FOR CARRYING OUT THE INVENTION

A description will be given of best modes for carrying out the present invention.

### (First embodiment)

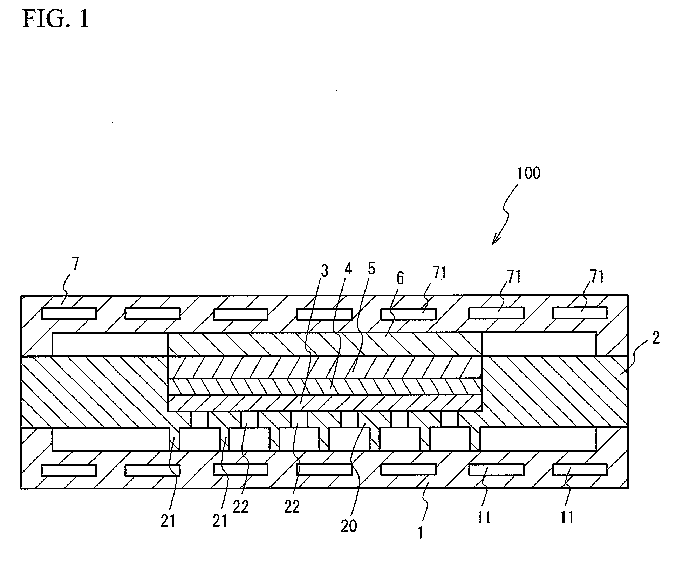

FIG. 1 illustrates a schematic cross sectional view of a fuel cell 100 in accordance with a first embodiment of the present invention. In this embodiment, a hydrogen permeable membrane fuel cell is used as a fuel cell. Here, the hydrogen permeable membrane fuel cell has a hydrogen permeable membrane. The hydrogen permeable membrane is composed of a metal having hydrogen permeability. The hydrogen permeable membrane fuel cell has a structure in which an electrolyte having proton conductivity is deposited on the hydrogen permeable membrane. Some hydrogen provided to an anode is converted into protons with catalyst reaction. The protons are conducted in the electrolyte having proton conductivity, react with oxygen provided to a cathode, and are converted into water. Electrical power is thus generated. A description will be given of a structure of the fuel cell 100.

As shown in FIG. 1, the fuel cell 100 has separators 1 and 7, a strengthening frame 2, a hydrogen permeable membrane 3, an electrolyte 4, a cathode 5 and a power collector 6. The separator 1 is composed of a conductive material such as stainless steal. And a convex portion is formed at a peripheral area on an upper face of the separator 1. A plurality of cooling water passageways 11, in which cooling water flows, are formed in the separator 1.

The strengthening frame 2 is composed of a conductive material such as a stainless steal. The strengthening frame 2 supports and strengthens the hydrogen permeable membrane 3 and the electrolyte 4. A recess is formed on a center area of an upper face of the strengthening frame 2. The hydrogen permeable membrane 3 and the electrolyte 4 are formed in the recess. The recess is hereinafter referred to as a recess portion 20. A plurality of projection portions 21 are formed on a lower face of the recess portion 20. The projection portion 21 is composed of the same material as that of the strengthening frame 2, and is formed with the strengthening frame 2 integrally. The strengthening frame 2 is jointed to the separator 1 through the projection portion 21 and the convex portion of the separator 1. A plurality of through holes 22 are formed in the recess portion 20.

The hydrogen permeable membrane 3 is composed of a hydrogen permeable metal, and acts as an anode to which a fuel gas is provided. A metal composing the hydrogen permeable membrane 3 is such as palladium, vanadium, titanium, tantalum or the like. An electrical potential of the strengthening frame 2 is substantially same as that of the hydrogen permeable membrane 3, because the hydrogen permeable membrane 3 is formed on the recess portion 20. Here, "substantially same electrical potential" means a case where a contact resistance is not considered. Therefore, the electrical potential of the strengthening frame 2 is substantially same as that of the hydrogen permeable membrane 3, even if an electrical potential differential is generated between the strengthening frame 2 and the hydrogen permeable membrane 3 because of the contact resistance.

The electrolyte 4 is laminated on the hydrogen permeable membrane 3. The electrolyte 4 is, for example, composed of a proton conductor such as a perovskite-type proton conductor (BaCeO₃ or the like), a solid acid proton conductor (CsHSO₄ or the like). The cathode 5 is, for example, composed of a conductive material such as lanthanum cobaltite, lanthanum manganate, silver, platinum, or platinum-supported carbon, and is laminated on the electrolyte 4.

The power collector 6 is, for example, composed of a conductive material such as a SUS430 porous material, a Ni porous material, a Pt-coated Al₂O₃ porous material, or a Pt mesh. The power collector 6 is laminated on the cathode 5. The separator 7 is composed of a conductive material such as stainless steal, and is laminated on the power collector 6. And a convex portion is formed at a peripheral area on a lower face of the separator 7. A plurality of cooling water passageways 71, in which cooling water flows, are formed in the separator 7. The separator 7 is jointed to the strengthening frame 2 through the convex portion of the separator 7.

A joint face between the separator 7 and the strengthening frame 2 is subjected to an insulating treatment. The cathode 5 and the power collector 6 are formed on the electrolyte 4 so as not to contact with the strengthening frame 2. Therefore, the separator 7 is electrically insulated from the strengthening frame 2. It is therefore possible to restrain a failure of power generation of the fuel cell 100. And, a plurality of the fuel cells 100 in accordance with the embodiment is laminated in an actual fuel cell.

Next, a description will be given of an operation of the fuel cell 100. A fuel gas including hydrogen is provided to a gas passageway of the separator 1. This fuel gas is provided to the hydrogen permeable membrane 3 via the through holes 22 of the strengthening frame 2. Some hydrogen in the fuel gas is converted into protons at the hydrogen permeable membrane 3. The protons are conducted in the hydrogen permeable membrane 3 and the electrolyte 4 and get to the cathode 5.

On the other hand, an oxidant gas including oxygen is provided to a gas passageway of the separator 7. This oxidant gas is provided to the cathode 5 via the power collector 6. The protons react with oxygen in the oxidant gas provided to the cathode 5. Water and electrical power are thus generated. The generated electrical power is collected via the projection portion 21, the power collector 6 and the separators 1 and 7. With the operations, the fuel cell 100 generates an electrical power. The cooling water flows in the cooling water passageways 11 and 71. The fuel cell 100 thus keeps a given temperature.

In the embodiment, the projection portion 21 aligns the fuel gas flowing between the separator 1 and the strengthening frame 2. The fuel cell is thus provided to the hydrogen permeable membrane 3. And strength of the recess portion 20 is increased because a plurality of the projection portions 21 are formed on the lower face of the recess portion 20. The deformation of the recess portion 20 may be therefore restrained. In this case, it is possible to restrain a gas leak to outside caused by the deformation of the recess portion 20. And a stress to the hydrogen permeable membrane 3 and the electrolyte 4 is reduced. It is therefore possible to restrain the separation of the electrolyte 4. And it is possible to reduce the thickness of the recess portion 20. And it is possible to restrain an increase of heat capacity of the strengthening frame 2.

It is possible to restrain a warpage of the recess portion 20 in a case where the temperature of the fuel cell 100 is increased. It is therefore possible to restrain a problem that the electrolyte 4 is separated from the hydrogen permeable membrane 3 because of the temperature increase, even if the thickness of the recess portion 20, the hydrogen permeable membrane 3 and the electrolyte 4 are reduced.

There is no contact resistance between the projection portion 21 and the strengthening frame 2, because the projection portion 21 is formed with the strengthening frame 2 integrally. The contact resistance of the fuel cell 100 is therefore reduced. And it is not necessary to provide a power collector between the strengthening frame 2 and the separator 1, because the projection portion 21 is jointed to the separator 1 directly. The fuel cell 100 therefore has an advantage in a cost.

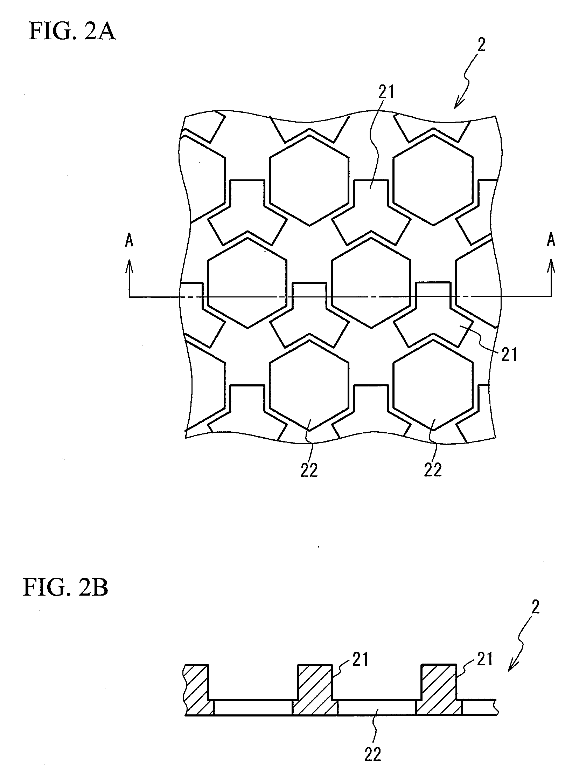

FIG. 2A and FIG. 2B illustrate details of the strengthening frame 2. FIG. 2A illustrates a partially omitted top view of the lower face of the strengthening frame 2. FIG. 2B illustrates a cross sectional view taken along a line A-A of FIG. 2A. As shown in FIG. 2A, the through hole 22 has a hexagonal shape. Each side of the hexagon forming the through hole 22, for example, has a length of 0.2 mm. Each of the through holes 22 is arranged periodically at a given interval (for example 0.2 mm). And each of the through holes 22 is formed so that facing sides of the through holes 22 adjacent to each other are in parallel with each other.

Here, a center point of three of the through holes 22 adjacent to each other is referred to as a point CP. In this case, the projection portion 21 is formed at one of the points CP adjacent to each other. The projection portion 21 extends in three directions from the point CP in parallel with facing sides of the through holes 22 adjacent to each other. Each of the three extending portions, for example, has a width of 0.15 mm. A height of the projection portion 21 is, for example, 0.5 mm.

The shape of the through hole 22 is not limited, and may have a polygonal shape or a circular shape. The through holes 22 may have a shape different from each other. Each of the through holes 22 may not be arranged periodically. An area ratio of the through hole 22 in the strengthening frame 2 is, for example, approximately 40 %. The shape of the projection portion 21 is not limited, and may have a polygonal column shape, a cylindrical column shape or a fin shape. The projection portions 21 may have a shape different from each other. Each of the projection portions 21 may not be arranged periodically. The number of the projection portion 21 is not limited.

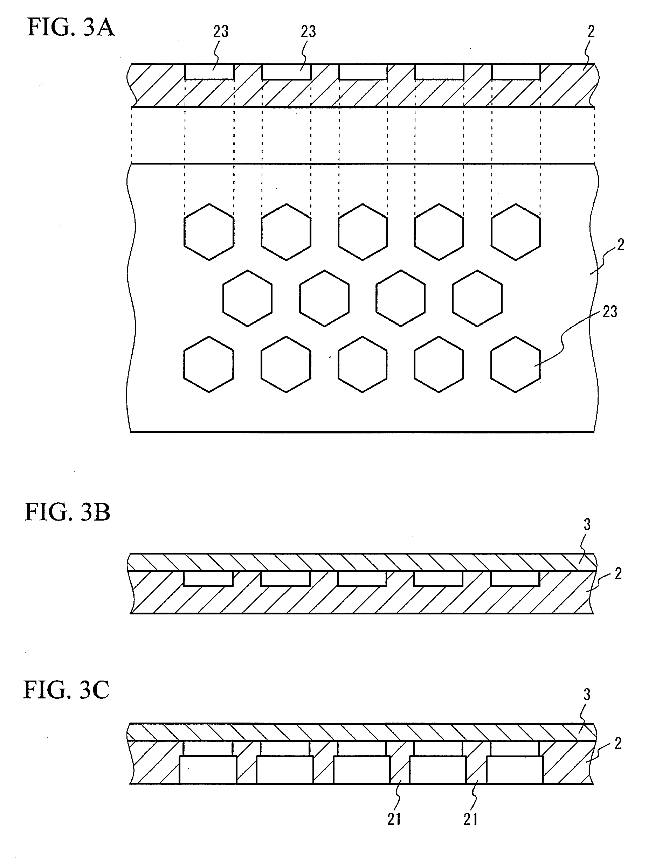

Next, a description will be given of a method of manufacturing the fuel cell 100. FIG. 3A through FIG. 4C illustrate a manufacturing flow diagram of the fuel cell 100. FIG. 3A illustrates a cross sectional view and a top view of the strengthening frame 2. As shown in FIG. 3A, a face of the strengthening frame 2 is subjected to a half etching treatment and a plurality of recesses 23 are formed. The recess 23 corresponds to the through hole 22 shown in FIG. 2A and FIG. 2B. Therefore, the recess 23 has the same shape as that of the through hole 22. A position of the recess 23 is the same as that of the through hole 22. The strengthening frame 2, for example, has a thickness of 0.7 mm. The recess 23, for example, has a depth of 0.2 mm.

Next, as shown in FIG. 3B, the hydrogen permeable membrane 3 is jointed to the upper face of the strengthening frame 2 with a cold rolling method in a temperature range under 300 degrees C. A cladding may be used as the cold rolling method. Then, as shown in FIG. 3C, the strengthening frame 2 is subj ected to an etching treatment. In this case, the strengthening frame 2 is subjected to a half etching treatment with a mask or the like so that the hydrogen permeable membrane 3 is exposed through the through hole 22 shown in FIG. 2A and FIG. 2B and the projection portion 21 is formed. In this case, it is restrained that the hydrogen permeable membrane 3 is damaged with an excessive half etching, because the recess 23 is formed on the strengthening frame 2.

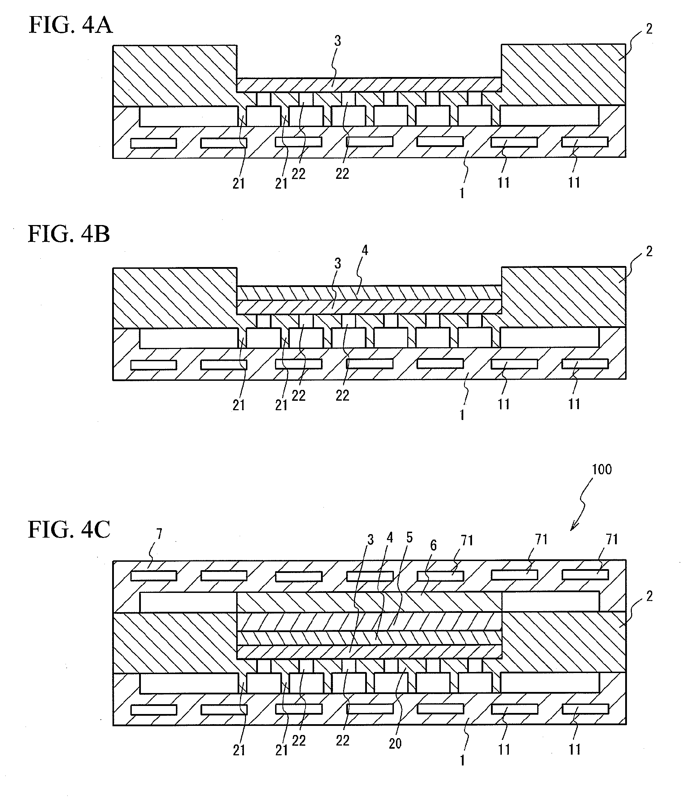

Next, as shown in FIG 4A, the strengthening frame 2 is jointed to the separator 1. In this case, the projection portion 21 is jointed to the separator 1 with a brazing material or the like. Then, as shown in FIG. 4B, the electrolyte 4 is formed on the hydrogen permeable membrane 3. Next, as shown in FIG. 4C, the cathode 5 and the power collector 6 are formed on the electrolyte 4. The separator 7 is provided on the power collector 6 and on the strengthening frame 2. With the processes, the fuel cell 100 is fabricated.

There is little deformation of the through hole 22 caused by the cladding, because the through hole 22 is formed after the strengthening frame 2 is jointed to the hydrogen permeable membrane 3 with the cladding in the embodiment. It is therefore possible to restrain a reduction of providing efficiency of the fuel cell to the hydrogen permeable membrane 3. The composition of the strengthening frame 2 and the hydrogen permeable membrane 3 may be changed if the strengthening frame 2 is jointed to the hydrogen permeable membrane 3 with the diffusion jointing. However, it is possible to restrain the composition change of the strengthening frame and the hydrogen permeable membrane, because the strengthening frame is jointed to the hydrogen permeable membrane with the cladding. It is further possible to restrain a damage to the electrolyte 4 caused by a pressure during the jointing, because the electrolyte 4 is formed after the jointing of the strengthening frame 2 to the separator 1. The above-mentioned etching treatment may be a dry etching treatment or a wet etching treatment.

The strengthening frame 2 and the projection portion 21 have an integral structure, because the projection portion 21 is formed with the half etching treatment. In this case, the strength of the recess portion 20 is increased. Therefore, the deformation of the recess portion 20 may be restrained. And, there is no contact resistance between the projection portion 21 and the strengthening frame 2. The contact resistance of the fuel cell 100 may be reduced. A process of providing a power collector between the strengthening frame 2 and the separator 1 is omitted, because the projection portion 21 is jointed directly to the separator 1.

## Claims

1. A method of manufacturing a fuel cell **characterized by** comprising:
a first step of forming at least a recess portion on one side of a strengthening frame with a half etching treatment;
a second step of jointing a hydrogen permeable membrane to the one side of the strengthening frame with a cladding; and
a third step of performing a half etching treatment to a region that is from a region of the other side of the strengthening frame corresponding to the recess portion to the recess portion.

2. The method as claimed in claim 1 **characterized in that** the third step includes a step of performing a half etching treatment to a given region of the other side of the strengthening frame except for the region corresponding to the recess portion and forming at least a projection portion on the other side of the strengthening frame.

3. The method as claimed in claim 1 or 2 **characterized in that** the strengthening frame has electrical conductivity.

4. The method as claimed in claim 3 **characterized by** further comprising a fourth step of jointing the strengthening frame to a separator through the projection portion.

5. The method as claimed in claim 4 **characterized by** further comprising a fifth step of forming an electrolyte having proton conductivity on the one side of the hydrogen permeable membrane after the fourth step.

6. The method as claimed in claim 5 **characterized by** further comprising a sixth step of providing a cathode, a power collector and a separator in order on the other side of the electrolyte.

7. A fuel cell **characterized by** comprising:
an electrical power generator having a hydrogen permeable membrane, an electrolyte having proton conductivity, and a cathode; and
a strengthening frame that strengthens the hydrogen permeable membrane and the electrolyte,
wherein at least a projection portion is provided on the strengthening frame on an opposite side of the hydrogen permeable membrane.

8. The fuel cell as claimed in claim 7 **characterized in that**:
the strengthening frame has an electrical conductivity; and
an electrical potential of the strengthening frame is substantially same as that of the hydrogen permeable membrane.

9. The fuel cell as claimed in claim 8 **characterized by** further comprising a separator jointed to the strengthening frame through at least the projection portion.
